**Europäisches Patentamt**

**European Patent Office**

**Office européen des brevets**

(19)

(11) **EP 1 372 286 A1**

(12) **EUROPÄISCHE PATENTANMELDUNG**

(43) Veröffentlichungstag:
**17.12.2003 Patentblatt 2003/51**

(51) Int Cl.⁷: **H04H 1/00**, H04J 3/06

(21) Anmeldenummer: **03007606.1**

(22) Anmeldetag: **02.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **14.06.2002 DE 10226577**

(71) Anmelder: **ROBERT BOSCH GMBH**
**70442 Stuttgart (DE)**

(72) Erfinder:
• **Barthel, Joerg**
**31139 Hildesheim (DE)**
• **Mittendorf, Christian**
**31137 Hildesheim (DE)**

(54) **Verfahren zur empfängerseitigen Rückgewinnung und/oder Nachregelung einer Abtastfrequenz zur Anpassung an die Abtastfrequenz eines empfangenen Signals**

(57) Vorgeschlagen wird ein Verfahren zur Rückgewinnung und/oder Nachregelung einer ersten Abtastfrequenz in einem Empfänger, der zum Empfang mit einer zweiten Abtastfrequenz abgetasteter, über einen Übertragungskanal übertragener Signale ausgebildet ist, dadurch gekennzeichnet, dass die empfangenen Signale in einen Pufferspeicher des Empfängers eingeschrieben werden, dass die empfangenen Signale in Abhängigkeit der ersten Abtastfrequenz aus dem Pufferspeicher ausgelesen werden, und dass die erste Abtastfrequenz aus dem Füllstand des Pufferspeichers abgeleitet wird. Das erfindungsgemäße Verfahren hat den Vorteil der Sicherstellung der empfängerseitigen Takt-Rückgewinnung auch bei nicht-isochroner Datenübertragung, des weiteren einer automatischen Anpassung eines Empfängers auf den Taktjitter eines Senders sowie eine automatische Anpassung des Empfängers auf eine beliebige Abtastfrequenz des Senders.

Fig. 2

**Beschreibung**

Stand der Technik

Die Erfindung geht von einem Verfahren zur empfängerseitigen Rückgewinnung und/oder Nachregelung einer Abtastfrequenz zur Anpassung an die Abtastfrequenz eines empfangenen Signals nach der Gattung des unabhängigen Patentanspruchs aus.

Digitale Signalübertragungssysteme sind beispielsweise aus dem Bereich des digitalen Rundfunks, etwa DAB (Digital Audio Broadcasting), DMB (Digital Multimedia Broadcasting) oder ähnliche, bekannt. Bei solchen Systemen wird senderseitig das analoge Audio- und/oder Video-Eingangssignal mit der Abtastfrequenz fs1 digitalisiert. Anschließend erfolgt die Übertragung über einen Kanal, der von einem senderseitigen Kanalencoder und einem empfängerseitigen Kanaldecoder eingerahmt wird. Empfängerseitig erfolgt eine Digital-Analog-Wandlung mittels eines entsprechenden Digital-Analog-Konverters mit der Abtastfrequenz fs2, die idealerweise der senderseitigen Abtastfrequenz fs1 entsprechen sollte, sowie anschließend die Audio- und/oder Video-Wiedergabe des übertragenen Signals.

Bei solchen Signalübertragungssystemen gemäß dem Stand der Technik kann empfängerseitig ein Datenpufferspeicher vorgesehen sein, der die empfangenen Audio- und/oder Video-Daten vor deren Ausgabe zwischenspeichert, um etwaige Verzögerungen beim Eintreffen einzelner Audio- und/oder Video-Datenpakete abzufangen. Die Größe und Notwendigkeit dieses Speichers ist stark von dem Kanal und den verwendeten Übertragungsverfahren abhängig. Eine Notwendigkeit für einen solchen Speicher ergibt sich beispielsweise bei paketorientierter Übertragung über TCP/IP.

Zur empfängerseitigen Ausgabe der empfangenen Daten ist eine Abtastfrequenz fs2 zur Ansteuerung des Digital-Analog-Wandlers erforderlich, die der senderseitigen Abtastfrequenz fs1 entspricht. Da bei dem beschriebenen System empfängerseitig keine Informationen darüber vorliegen, wie groß die senderseitige Abtastfrequenz fs1 genau ist, muss die Taktinformation für die empfängerseitige Abtastfrequenz fs2 aus den eintreffenden Datenpaketen gewonnen werden. Die Rückgewinnung des Abtasttaktes auf der Empfängerseite kann zum Beispiel mit Hilfe der Frequenz der eintreffenden Datenpakete erfolgen. Dieses Verfahren setzt voraus, dass es sich um eine isochrone Datenübertragung handelt, womit alle Pakete genau die gleiche Laufzeit über den Kanal benötigen. In paketvermittelten Netzen, wie zum Beispiel TCP/IP, kann diese Lösung daher nicht verwendet werden.

Ein anderer Ansatz besteht darin, den Ausgabetakt auf der Empfängerseite fest vorzugeben. Das Problem beruht darin, dass die beiden Abtastfrequenzen fs1 und fs2 zwar den gleichen Nennwert haben, deren reale Werte aber aufgrund von Abweichungen durch Bauteiletoleranzen oder Schwankungen niemals genau übereinstimmen werden. Ist die empfängerseitige Abtastfrequenz fs2 nur minimal kleiner als die senderseitige Abtastfrequenz fs1, wird nach einer gewissen Zeit der empfängerseitige Pufferspeicher überlaufen. Umgekehrt wird der empfängerseitige Pufferspeicher leerlaufen, wenn die empfängerseitige Abtastfrequenz fs2 größer als die senderseitige Abtastfrequenz fs1 ist. Dies wirkt sich im Falle einer Audiosignalübertragung in einem Knacken oder in einer Unterbrechung des Audiosignals aus, die durch den Zuhörer als störend empfunden wird.

Bei aktuellen (Digital-) Rundfunksystemen wird in der Regel versucht, empfängerseitig die Taktfrequenz des (senderseitigen) Encoders aus dem Empfangssignal abzuleiten und diesen als Mastertakt für den Dekoder zu verwenden. Dies ist jedoch bei nicht isochroner, beispielsweise paketorientierter Übertragung ohne weiteres ersichtlich nicht möglich.

Aktuelle Systeme gemäß dem Stand der Technik sind daher derart ausgebildet, dass der empfängerseitige Pufferspeicher so groß ausgelegt wird, dass zum einen unterschiedliche Paketlaufzeiten über dem Kanal ausgeglichen werden können, und zum anderen das Leer- bzw. Voll-Laufen des Puffers durch unterschiedliche Frequenzen fs1 und fs2 möglichst lange hinausgezögert wird. Die oben beschriebenen Folgen voneinander abweichender sender- und empfängerseitigen Abtastfrequenzen fs1 und fs2 lassen sich damit letztlich aber nicht verhindern. Dieses Vorgehen wird angewandt, wenn eine Taktrückgewinnung aus dem ankommenden bzw. empfangenen Signal nicht möglich ist oder die Verwendung eines Master-Taktes für den Dekoder nicht praktikabel ist.

Vorteile der Erfindung

Das erfindungsgemäße Verfahren mit den Merkmalen des unabhängigen Patentanspruchs vermeidet in vorteilhafter Weise die eingangs erwähnten Nachteile.

Insbesondere hat das erfindungsgemäße Verfahren den Vorteil, dass eine empfängerseitige Abtastfrequenz-Rückgewinnung bzw. -Anpassung auch bei nicht isochroner Datenübertragung, beispielsweise in TCP/IP-Netzen, sichergestellt ist. Darüber hinaus ermöglicht die Erfindung eine automatische Adaption eines Signal-, beispielsweise Audio-Empfängers, auf unterschiedliche Abtastraten des Senders bzw. des von dem Sender empfangenen Signals, beispielsweise 32 kHz, 44,1 kHz und 48 kHz. Schließlich ermöglicht die Erfindung eine automatische Adaption der empfängerseitigen Abtastfrequenz auf eine schwankende Abtastfrequenz des Senders und damit des Empfangssignals.

Die Erfindung verbessert damit das unter der Überschrift "Stand der Technik" vorgestellte Verfahren dahingehend, dass keine störenden Geräusche, wie beispielsweise Knacken oder Unterbrechungen, im empfängerseitig wiedergegebenen Audiosignal mehr auftreten. Diese Lösung ist bei Systemen vorteilhaft, die keine Taktkopplung zwischen Sender und Empfänger haben, wie beispielsweise digitale Rundfunkverfahren wie DMB- (Digtial Multimedia Broadcasting) Live-Mode oder Audio-Live-Übertragungen, zum Beispiel aus dem Internet. Die vorgeschlagene Lösung ist darüber hinaus auch dann von Vorteil, wenn eine Taktrückgewinnung bzw. -verteilung auf dem Dekoder nicht möglich ist.

Dies wird erfindungsgemäß dadurch erreicht, dass bei einem Verfahren zur Rückgewinnung und/oder Nachregelung einer ersten Abtastfrequenz in einem Empfänger, der zum Empfang mit einer zweiten Abtastfrequenz abgetasteter, über einen Übertragungskanal übertragener Signale ausgebildet ist, vorgesehen wird, dass die empfangenen Signale in einen Pufferspeicher des Empfängers eingeschrieben werden, dass weiterhin die empfangenen Signale in Abhängigkeit der ersten Abtastfrequenz aus dem Pufferspeicher ausgelesen werden, und dass schließlich die erste Abtastfrequenz aus dem Füllstand des Pufferspeichers abgeleitet wird.

Vorteilhafte Ausführungsformen und Weiterbildungen der Erfindung sind in den abhängigen Patentansprüchen angegeben.

So ist es von besonderem Vorteil, dass bei dem erfindungsgemäßen Verfahren die erste Abtastfrequenz so eingestellt wird, dass der Füllstand des Pufferspeichers oder ein Mittelwert des Pufferspeicherfüllstandes im wesentlichen gleich bleibt.

Weiterhin ist es von Vorteil, dass die erste Abtastfrequenz erhöht wird, wenn der Füllstand des Pufferspeichers oder ein Mittelwert des Pufferspeicherfüllstandes eine steigende Tendenz aufweist, und dass die erste Abtastfrequenz vermindert wird, wenn der Füllstand des Pufferspeichers oder ein Mittelwert des Pufferspeicherfüllstandes eine fallende Tendenz aufweist.

Weiter ist es von Vorteil, wenn bei dem erfindungsgemäßen Verfahren eine Anpassung der ersten Abtastfrequenz nur dann erfolgt, wenn der Füllstand des Pufferspeichers oder ein Mittelwert des Pufferspeicherfüllstandes einen vorgegebenen Minimalwert unterschreitet oder einen vorgegebenen Maximalwert überschreitet. Das Vorsehen einer solchen Hysterese in der Anpassung der empfängerseitigen Abtastfrequenz hat den Vorteil, dass Regelschwingungen unterdrückt werden. Darüber hinaus hat das Vorsehen der Hysterese den Vorteil, dass der Wert der empfängerseitigen Abtastfrequenz nicht ständig nachgeregelt werden muss, so dass beispielsweise die Belastung eines Prozessors zur Berechnung der empfängerseitigen Abtastfrequenz vermindert wird.

Weiterhin ist es von Vorteil, wenn der Mittelwert des Pufferspeicherfüllstandes als gleitender zeitlicher Mittelwert über die Momentanpufferspeicherfüllstände bestimmt wird. Die Beobachtung von Mittelwerten der Pufferspeicherfüllstände bewirkt in vorteilhafter Weise eine Reduzierung von Regelschwingungen, ebenso wie einen reduzierten Regelhub und damit eine geringere Prozessorbelastung zur Berechnung der empfängerseitigen Abtastfrequenzen. Darüber hinaus ermöglicht dies den Empfang und die Verarbeitung solcher Empfangssignale, bei denen Datenpakete oder allgemeiner Datenbestandteile in vergleichsweise relativ unregelmäßiger Reihenfolge im Empfänger eintreffen.

Dies gilt umso mehr, wenn der Mittelwert des Pufferspeicherfüllstandes als gedächtnisbehafteter gleitender zeitlicher Mittelwert über die Momentanpufferspeicherfüllstände bestimmt wird.

Zeichnungen

Ausführungsbeispiele der Erfindung sind in den Figuren dargestellt und werden nachfolgend näher erläutert. Gleiche Bezugszeichen in verschiedenen Figuren bezeichnen dabei gleiche oder im wesentlichen gleiche bzw. gleich wirkende Funktionsblöcke bzw. Signale.

Es zeigen

Figur 1           ein Blockschaltbild eines Audio-Datenübertragungssystems nach dem Stand der Technik,

Figur 2           einen erfindungsgemäßen Empfänger zur Durchführung des erfindungsgemäßen Verfahrens, und

Figuren 3 und 4    die zeitlichen Abläufe des Eintreffens von Audio-Datenpaketen im Empfänger sowie der Ausgabe von Audio-Datenpakten mittels einer Ausgabevorrichtung des Empfängers sowie die daraus resultierenden Pufferspeicherfüllstände im Empfänger.

Beschreibung der Ausführungsbeispiele

Das erfindungsgemäße Verfahren wird nachfolgend am Beispiel eines Rundfunkempfängers für digitalen Audio- bzw. Video-Rundfunk beschrieben. Dies stellt jedoch keinerlei Einschränkung des Anmeldungsgegenstandes auf solche Systeme dar, vielmehr ist die Erfindung allgemein auf Empfänger für digitale Signale anwendbar.

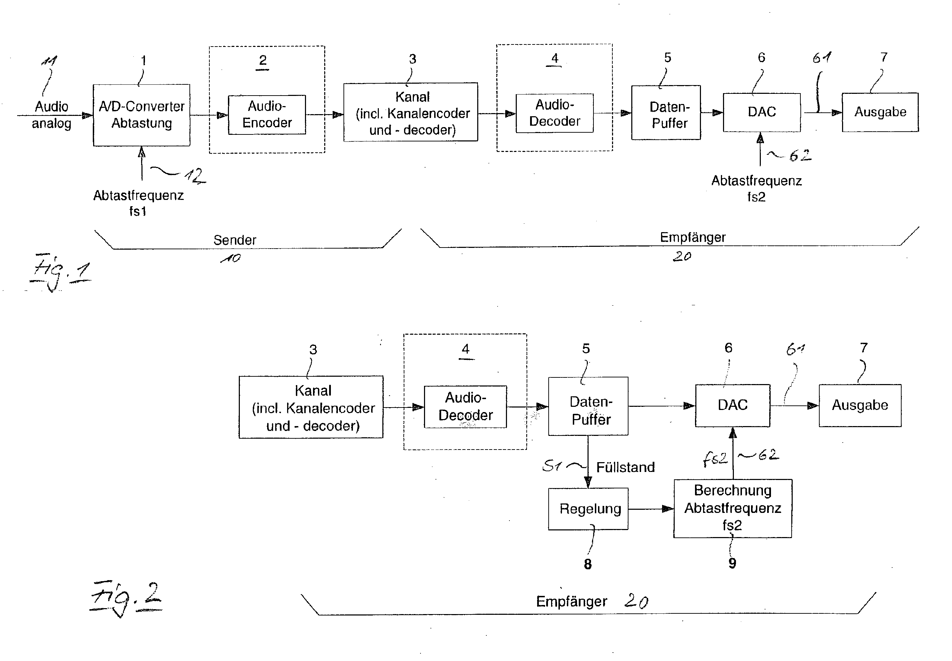

Figur 1 zeigt ein System zur Übertragung digitaler Audiosignale, bestehend aus einem Sender 10, einem Übertragungskanal 3 und einem Empfänger 20.

Einem Analog-Digital-Wandler 1 des Senders 10 ist ein analoges Audiosignal 11, beispielsweise ein Rundfunkprogrammsignal, zugeführt, das in dem Analog-Digital-Wandler 1 mittels einer senderseitigen Abtastfrequenz fs1 (Bezugzeichen 12), die nachfolgend auch als zweite Abtastfrequenz bezeichnet wird, digitalisiert wird. Das digitale Audiosignal, das am Ausgang des Analog-Digital-Wandlers 1 ansteht, ist einem Audio-Encoder 2 zugeführt, in dem es im vorliegenden Fall MPEG-4-codiert wird. Das encodierte digitale Audiosignal wird sodann, im vorliegenden Fall nach zusätzlicher Kanalencodierung, gesendet und über den Übertragungskanal 3 übertragen.

Der Empfänger 20 empfängt das über den Übertragungskanal 3 übertragene Empfangssignal und unterzieht dieses im vorliegenden Fall einer Kanaldecodierung, die ebenfalls als Bestandteil des Übertragungskanals 3 dargestellt ist. Nach Kanaldecodierung wird das Empfangssignal in einem Audio-Decoder 4 decodiert und die decodierten Audiodaten in einen Pufferspeicher 5 eingeschrieben. Der Pufferspeicher 5 ist dabei in Form eines sogenannten FIFO-Puffers ausgeführt, d.h., dass die zuerst eingeschriebenen Audiodaten auch als erste wieder ausgelesen werden. Die aus dem Pufferspeicher ausgelesenen Audiodaten werden anschließend in einem Digital-Analog-Wandler 6 mittels einer empfängerseitigen Abtastfrequenz fs2 (Bezugzeichen 62), nachfolgend auch als erste Abtastfrequenz bezeichnet, in ein analoges Audiosignal 61 zurückgewandelt und schließlich über eine Ausgabeeinheit 7, die im vorliegenden Fall in der Figur nicht dargestellte Mittel zur Klang- und Lautstärkebeeinflussung des Signals und darüber hinaus über Verstärkerstufen und Lautsprecher verfügt, ausgegeben.

Ein erfindungsgemäßer Empfänger zur Durchführung des erfindungsgemäßen Verfahrens verfügt über die genannten Bestandteile hinaus, wie in Figur 2 dargestellt, über weitere Funktionsblöcke 8 und 9. Diese haben die Aufgaben

- Überprüfung des Pufferspeicherfüllstandes 51 in regelmäßigen zeitlichen Abständen
- gemäß einer vorteilhaften Ausführungsform der Erfindung mitteln des Pufferspeicherfüllstandes 51 über eine definierte Zeitspanne, vorzugsweise Bildung eines gleitenden Mittelwerts, insbesondere eines gedächtnisbehafteten gleitenden Mittelwerts
- Beobachtung der Pufferspeicherfüllstandstendenz
- Erhöhen bzw. Verringern der empfängerseitigen Abtastfrequenz fs2 (62) unter Beachtung vorgegebener Ober- bzw. Untergrenzen des Pufferspeicherfüllstandes, also unter Beachtung einer Regelhysterese,
- Nachführen der empfängerseitigen Abtastfrequenz fs2 durch weitere Beobachtung des Pufferspeicherfüllstandes unter Berücksichtigung oben genannten Regelalgorithmusses.

Der Ablauf des erfindungsgemäßen Verfahrens stellt sich wie folgt dar. Im Ausgangszustand ist der Empfänger 20 so eingerichtet, dass die Audioausgabe mittels der Ausgabemittel 7 erst dann gestartet wird, wenn der Pufferspeicher 5 ungefähr bis zur Hälfte seines maximalen Füllstandes gefüllt ist. Die erste Abtastfrequenz fs2 (62) ist dabei auf einen vorgegebenen Wert oder, wenn bekannt, auf den Nennwert der senderseitigen Abtastfrequenz fs1 eingestellt. Das Auffüllen des Pufferspeichers 5 bis zur Hälfte ist notwendig, um dem System einen Spielraum zu geben, sinkende bzw. steigende Pufferspeicherfüllstände zu erkennen und ohne Nachregelung der ersten Abtastfrequenz fs1 auszugleichen.

Nach dem Einschalten des Empfängers 20 erfolgt die Digital-Analog-Wandlung 6 der aus dem Pufferspeicher 5 ausgelesenen Audiodaten zunächst mit der voreingestellten empfängerseitigen Abtastfrequenz fs2. Die Regelung hat die Aufgabe, den Füllstand des Pufferspeichers 5 in regelmäßigen Abständen zu überwachen. Das Zeitraster für die Überwachung,ist an die gewählte Audiodatenübertragung und die Größe des Pufferspeichers angepasst.

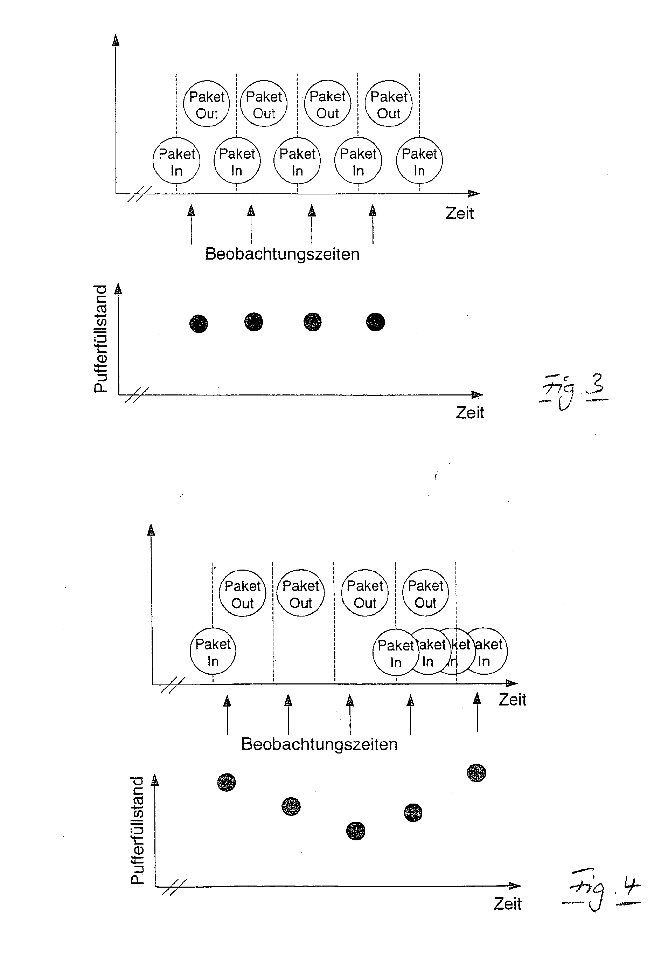

Figur 3 zeigt Verläufe des Eintreffens und des Auslesens von Audiodaten und die resultierenden Pufferspeicherfüllstände zu den Beobachtungszeiten. Aufgrund des gleichmäßigen Eintreffens von Audiodaten-Paketen vom Sender und des gleichmäßigen Auslesens von Audiodaten-Paketen zwecks deren Wiedergabe über die Ausgabeeinheit 7 ergibt sich für den Pufferspeicherfüllstand des Pufferspeichers 5 ein im wesentlichen zeitlich konstanter Verlauf.

Durch Auswertung der Pufferspeicherfüllstände in den Beobachtungszeitpunkten kann die Regelung darauf schließen, ob die eingestellte empfängerseitige Frequenz fs2 (62) für die gewählte Abtastfrequenz im Sender zu groß oder zu klein ist, wobei ein volllaufender Pufferspeicher auf eine zu klein, ein leerlaufender Pufferspeicher 5 auf eine zu hoch gewählte empfängerseitige Abtasfrequenz fs2 hindeutet. Um eine sichere Aussage über das Pufferspeicherfüllstandsverhalten zu erhalten, wird der Prozess von der Regelung so lange beobachtet, bis eine voreingestellte obere bzw. untere Schranke über- bzw. unterschritten wird. Erst wenn dieser Fall eintritt, wird die empfängerseitige Abtastfrequenz fs2 um einen kleinen Wert erhöht bzw. erniedrigt. Im weiteren Verlauf wird überprüft, ob die eingeleitete Maßnahme, nämlich die Anpassung der empfängerseitigen Abtastfrequenz fs2, Erfolg zeigt, d.h. ob sich die Pufferspeicherfüllstandstendenz in die entsprechend andere Richtung bewegt. Sollte dies der Fall sein, war die Korrektur der empfängerseitigen Abtastfrequenz fs2 ausreichend. Ansonsten wird die empfängerseitige Abtastfrequenz fs2 entsprechend weiter erhöht bzw. erniedrigt. Die Schrittweite, mit der die Anpassung der empfängerseitigen Abtastfrequenz fs2 vorgenommen wird, kann im Verlauf der Regelung immer weiter verkleinert werden. Im Idealfall wird die empfängerseitige Abtastfrequenz fs2 auf den gleichen Wert wie die senderseitig gewählte Abtastfrequenz fs1 eingestellt oder zumindest ein Zustand erreicht, bei dem die empfängerseitige Abtastfrequenz fs2 stets zwischen zwei Stufen umgeschaltet wird und damit im Mittel der senderseitigen Abtastfrequenz fs1 entspricht.

Ein besonderer Vorteil dieses Verfahrens besteht darin, dass durch die Integration eines Filters in den Regelalgorithmus sein Einsatzbereich auch für Datenübertragungssysteme erweitert werden kann, bei denen die Übertragungskanäle keine konstante Laufzeit der Daten garantieren, beispielsweise nicht-isochrone Übertragungen wie TCP/IP.

Figur 4 zeigt ein Beispiel hierfür. Die im Pufferspeicher 5 gespeicherten Audiodaten werden weiterhin in regelmäßigen zeitlichen Abständen zur Ausgabeeinheit 7 transferiert (Paket-Out). Der Ausgabetakt bzw. die empfängerseitige Abtastfrequenz fs2 ist für den betrachteten Zeitraum fest eingestellt. In dem gezeigten Fall treffen die eingehenden Datenpakete (Paket-In) bedingt durch den Übertragungskanal sehr unregelmäßig beim Empfänger 20 ein und werden demzufolge auch in unregelmäßigen Zeitabständen in dessen Pufferspeicher 5 eingeschrieben. Dies führt dazu, dass der Pufferspeicherfüllstand zu den Beobachtungszeitpunkten zunächst abnimmt (unterer Teil der Figur 4). Zu einem bestimmten Zeitpunkt treffen dann mehrere Datenpakete auf einmal oder kurz aufeinanderfolgend ein, wodurch der Pufferspeicherfüllstand wieder ansteigt (rechte Hälfte der Figur 4). Damit der Effekt sprunghaft oder schnell steigender bzw. fallender Pufferspeicherfüllstände nicht die Funktion des Regelalgorithmus stört, wird hier nicht der ausgelesene Füllstand zur Regelung der empfängerseitigen Abtastfrequenz fs2 verwendet, sondern der Pufferspeicherfüllstand zunächst über ein FIR-Filter über einen längeren Zeitraum gemittelt. Dieser im vorliegenden Fall vorteilhafterweise gedächtnisbehaftete Filter genügt der Formel

$$\text{Neuer Mittelwert} = a * \text{aktueller Füllstand} - (1-a) * \text{alter Mittelwert}$$

Damit reagiert die Regelung nicht mehr auf den aktuellen Momentan-Pufferspeicherfüllstand, sondern erhält eine gewisse Trägheit zur Regelung der empfängerseitigen Abtastfrequenz fs2. Der weitere Regelalgorithmus arbeitet dann wie bereits beschrieben.

Die genauen Werte für obere und untere Schranke des Pufferspeicherfüllstandes, ab denen eine Erhöhung bzw. Erniedrigung der empfängerseitigen Abtastfrequenz erfolgt, also der Regelhysterese, des weiteren für die Zeitspanne, über welche eine Mittelung der Pufferspeicherfüllstände durchgeführt wird und schließlich des für den Gedächtnisfaktor der Mittelwertbildung maßgebenden Parameters a werden vorzugsweise experimentell ermittelt. Grundsätzlich sind für zunehmende Anisochronie der Datenübertragung eine größere Regelhysterese und eventuell auch ein großer Gedächtnisfaktor für die Mittelung von Vorteil, sofern die Kapazität des Pufferspeichers zum Ausgleichen der damit verbundenen starken Schwankungen der Pufferspeicherfüllstände ausreichend gewählt ist.

Mit der beschriebenen Regelung werden die bereits beschriebenen Szenarien abgedeckt, nämlich die Sicherstellung der empfängerseitigen Abtastfrequenz-Rückgewinnung auch bei nicht-isochroner Datenübertragung, eine automatische Anpassung der empfängerseitigen Abtastfrequenz an schwankende senderseitige Abtastfrequenzen sowie eine automatische Anpassung der empfängerseitigen Empfangsfrequenz an verschiedene Abtastfrequenzen des Senders.

Das erfindungsgemäße Verfahren ist in besonders vorteilhafter Weise im MPEG-4-basierten DMB-System zur Regelung des Audio-Ausgabetaktes seitens eines DMB-Empfängers geeignet.

**Patentansprüche**

1. Verfahren zur Rückgewinnung und/oder Nachregelung einer ersten Abtastfrequenz in einem Empfänger, der zum Empfang mit einer zweiten Abtastfrequenz abgetasteter, über einen Übertragungskanal übertragener Signale ausgebildet ist,
   **dadurch gekennzeichnet,**
   **dass** die empfangenen Signale in einen Pufferspeicher des Empfängers eingeschrieben werden,
   **dass** die empfangenen Signale in Abhängigkeit der ersten Abtastfrequenz aus dem Pufferspeicher ausgelesen werden, und dass die erste Abtastfrequenz aus dem Füllstand des Pufferspeichers abgeleitet wird.

2. Verfahren nach Anspruch 1, **dadurch gekennzeichnet, dass** die erste Abtastfrequenz so eingestellt wird, dass der Füllstand des Pufferspeichers oder ein Mittelwert des Pufferspeicherfüllstandes im wesentlichen gleich bleibt.

3. Verfahren nach einem der Ansprüche 1 oder 2, **dadurch gekennzeichnet, dass** die erste Abtastfrequenz erhöht wird, wenn der Füllstand des Pufferspeichers oder ein Mittelwert des Pufferspeicherfüllstandes eine steigende Tendenz aufweist, und dass die erste Abtastfrequenz vermindert wird, wenn der Füllstand des Pufferspeichers oder ein Mittelwert des Pufferspeicherfüllstandes eine fallende Tendenz aufweist.

4. Verfahren nach Anspruch 3, **dadurch gekennzeichnet, dass** eine Anpassung der ersten Abtastfrequenz nur dann erfolgt, wenn der Füllstand des Pufferspeichers oder ein Mittelwert des Pufferspeicherfüllstandes einen vorgegebenen Minimalwert unterschreitet oder einen vorgegebenen Maximalwert überschreitet.

5. Verfahren nach einem der Ansprüche 2 bis 4, **dadurch gekennzeichnet, dass** der Mittelwert des Pufferspeicherfüllstandes als gleitender zeitlicher Mittelwert über die Momentanpufferspeicherfüllstände bestimmt wird.

6. Verfahren nach einem der Ansprüche 2 bis 4, **dadurch gekennzeichnet, dass** der Mittelwert des Pufferspeicherfüllstandes als gedächtnisbehafteter gleitender zeitlicher Mittelwert über die Momentanpufferspeicherfüllstände bestimmt wird.

Fig. 1

Sender 10 / Empfänger 20

Audio analog → A/D-Converter Abtastung (1) ← Abtastfrequenz fs1 (12) → Audio-Encoder (2) → Kanal (incl. Kanalencoder und -decoder) (3) → Audio-Decoder (4) → Daten-Puffer (5) → DAC (6) ← Abtastfrequenz fs2 (62) → Ausgabe (7) (61)

Fig. 2

Empfänger 20

Kanal (incl. Kanalencoder und -decoder) (3) → Audio-Decoder (4) → Daten-Puffer (5) → DAC (6) → Ausgabe (7) (61)

Füllstand S1 → Regelung (8) → Berechnung Abtastfrequenz fs2 (9) → DAC, fs2 (62)

Fig. 3

Fig. 4

**Europäisches Patentamt**

**EUROPÄISCHER RECHERCHENBERICHT**

Nummer der Anmeldung

EP 03 00 7606

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 301 258 B1 (KATSEFF HOWARD PAUL ET AL) 9. Oktober 2001 (2001-10-09) * Zusammenfassung; Ansprüche 1-10; Abbildungen 1-5 * * Spalte 2, Zeile 12 - Zeile 41 * * Spalte 4, Zeile 34 - Zeile 61 * * Spalte 5, Zeile 11 - Spalte 6, Zeile 65 * | 1-6 | H04H1/00 H04J3/06 |
| X | US 6 172 964 B1 (WHITTON ROBERT ALLAN) 9. Januar 2001 (2001-01-09) * Zusammenfassung; Ansprüche 1,2,5; Abbildung 1 * * Spalte 1, Zeile 44 - Spalte 2, Zeile 6 * * Spalte 2, Zeile 46 - Spalte 3, Zeile 15 * | 1-6 | |
| X | DE 100 24 267 A (BOSCH GMBH ROBERT) 29. November 2001 (2001-11-29) * Zusammenfassung; Ansprüche 1-10 * * Absätze [0008]-[0011],[0017]-[0023],[0030]-[0035] * | 1-3,5,6 | |
| | | | RECHERCHIERTE SACHGEBIETE (Int.Cl.7) |
| A | WO 01 93490 A (BOSCH GMBH ROBERT ;MLASKO TORSTEN (DE); ENGELSBERG ANDREAS (DE); M) 6. Dezember 2001 (2001-12-06) * Zusammenfassung; Anspruch 1 * * Seite 1, Zeile 15 - Zeile 34 * * Seite 5, Zeile 8 - Zeile 32 * | 1-6 | H04H H04J H04L H04Q |
| A | EP 1 209 861 A (ERICSSON TELEFON AB L M) 29. Mai 2002 (2002-05-29) * Zusammenfassung; Ansprüche 1-4; Abbildungen 4,5 * * Absätze [0015]-[0021] * | 5,6 | |

Der vorliegende Recherchenbericht wurde für alle Patentansprüche erstellt

| Recherchenort | Abschlußdatum der Recherche | Prüfer |
|---|---|---|
| DEN HAAG | 27. Oktober 2003 | Wolters, R |

**ANHANG ZUM EUROPÄISCHEN RECHERCHENBERICHT**
**ÜBER DIE EUROPÄISCHE PATENTANMELDUNG NR.**

EP 03 00 7606

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 6301258 | B1 | 09-10-2001 | KEINE | | |
| US 6172964 | B1 | 09-01-2001 | KEINE | | |
| DE 10024267 | A | 29-11-2001 | DE<br>WO<br>EP | 10024267 A1<br>0189137 A2<br>1287634 A2 | 29-11-2001<br>22-11-2001<br>05-03-2003 |
| WO 0193490 | A | 06-12-2001 | DE<br>WO<br>EP | 10026488 A1<br>0193490 A2<br>1287630 A2 | 24-01-2002<br>06-12-2001<br>05-03-2003 |
| EP 1209861 | A | 29-05-2002 | EP<br>AU<br>WO | 1209861 A1<br>2427402 A<br>0243334 A1 | 29-05-2002<br>03-06-2002<br>30-05-2002 |

EPO FORM P0461

Für nähere Einzelheiten zu diesem Anhang : siehe Amtsblatt des Europäischen Patentamts, Nr.12/82